(19) Europäisches Patentamt
European Patent Office
Office européen des brevets

(11) **EP 2 366 503 A2**

(12) **EUROPEAN PATENT APPLICATION**

(43) Date of publication:
**21.09.2011 Bulletin 2011/38**

(51) Int Cl.:
**B25J 9/16** (2006.01)

(21) Application number: **11157453.9**

(22) Date of filing: **09.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.03.2010 JP 2010059621**

(71) Applicant: **Sony Corporation**
**Tokyo 108-0075 (JP)**

(72) Inventors:
• **Iwai, Yoshiaki**
  **TOKYO 108-0075 (JP)**

• **Suto, Yasuhiro**
  **TOKYO 108-0075 (JP)**
• **Nagasaka, Kenichiro**
  **TOKYO 108-0075 (JP)**
• **Tanaka, Akichika**
  **TOKYO 108-0075 (JP)**
• **Kito, Takashi**
  **TOKYO 108-0075 (JP)**

(74) Representative: **Körber, Martin Hans**
**Mitscherlich & Partner**
**Patent- und Rechtsanwälte**
**Sonnenstraße 33**
**80331 München (DE)**

(54) **Control apparatus, control method and program**

(57) Provided is a control apparatus comprising an executing unit for allowing a movable body to perform a predetermined process, a storage unit for storing an environment map of a movable area of the movable body, a detection unit for detecting information on the surroundings of the movable body, an update unit for updating the environment map based on the information on the surroundings of the movable body, which is detected by the detection unit, and an acquisition unit for acquiring instruction information representing an instruction of a user according to user input, wherein the executing unit allows the movable body to perform the process based on the instruction information with reference to the environment map, and the update unit updates the environment map based on the instruction information and the process performed by the movable body based on the instruction information.

**FIG. 2**

**Description**

BACKGROUND OF THE INVENTION

Field of the Invention

The present invention relates to a control apparatus, a control method and a program.

Description of the Related Art

Recently, a robot (hereinafter, referred to as a "movable body") capable of independently performing operations according to external states around the robot or internal states of the robot itself has been developed. For example, a robot which plans an action path in order to detect external obstacles to avoid the obstacles or creates an obstacle map of a surrounding environment to decide the action path based on the map in a walking operation has been developed (Japanese Unexamined Patent Application Publication Nos. 2003-269937 and 2006-11880).

For example, in Japanese Unexamined Patent Application Publication No 2003-269937, the presence or absence of an obstacle is estimated by detecting a floor surface from three-dimensional distance information acquired by a robot apparatus. In detail, the surroundings of the robot apparatus can be expressed by an environment map as map information of a robot-centered coordinate system which is divided in grids having a predetermined size, and the existence probability of an obstacle can be held for each grid of the map. A grid for which the existence probability exceeds a predetermined threshold value is recognized as an obstacle, so that the surroundings of the robot are identified. Furthermore, in Japanese Unexamined Patent Application Publication No. 2006-11880, it is possible to express a surrounding environment with high resolution in the height direction while showing high resistance to observation noise such as a plane or an obstacle which does not actually exist.

SUMMARY OF THE INVENTION

In the Japanese Unexamined Patent Application Publication Nos. 2003-269937 and 2006-11880, the robot creates the environment map by independently holding the existence probability of an object, an obstacle and the like around the robot. However, there has been increasing demand for the simplification of a work instruction to the robot by allowing information instructed by a user to the robot and the existence probability of an action according to the instruction to be reflected in the environment map.

In light of the foregoing, it is desirable to provide a novel and improved control apparatus, a control method and a program, which can update information on the surroundings of a robot through interaction with a user and simplify an instruction to the robot.

Various aspects of the present invention are defined in the appended claims.

According to an embodiment of the present invention, there is provided a control apparatus comprising:

an executing unit for allowing a movable body to perform a predetermined process;
a storage unit for storing an environment map of a movable area of the movable body;
a detection unit for detecting information on the surroundings of the movable body;
an update unit for updating the environment map based on the information on the surroundings of the movable body, which is detected by the detection unit; and
an acquisition unit for acquiring instruction information repres enting an instruction of a user according to user input,
wherein the executing unit allows the movable body to perform the process based on the instruction information with reference to the environment map, and
the update unit updates the environment map based on the instruction information and the process performed by the movable body based on the instruction information.

In the control apparatus, the environment map includes information representing an existence probability of an object, the detection unit detects the object around the movable body, and the update unit updates the existence probability of the object which is included in the environment map.

In the control apparatus, the update unit updates the environment map by relating information regarding the object, which is included in the instruction information, to the existence probability of the object.

In the control apparatus, the update unit updates the environment map by relating an instruction word, which is included in the instruction information, to the existence probability of the object.

In the control apparatus, the update unit updates an appearance probability of the instruction word at a predetermined time interval.

In the control apparatus, the executing unit analyzes the instruction information and allows the movable body to perform a process of moving an object indicated by a user, which is included in the instruction information, to a user's position.

In the control apparatus, the executing unit allows the movable body to move to a place of an object indicated by a user, and to move to a user's position while gripping the object.

The control apparatus is further comprising a determination unit for determining whether the process of the movable body performed by the executing unit corresponds to the instruction of the user.

In the control apparatus, when the determination unit determines that the process of the movable body performed by the executing unit coincides with the instruction of the user, the update unit increases an existence probability of information regarding an object which is included in the instruction information.

In the control apparatus, the update unit increases an existence probability of an indicated object in an indicated place which is included in the instruction information.

In the control apparatus, the update unit increases an existence probability of an instruction word at an indicated time which is included in the instruction information.

According to an embodiment of the present invention, there is provided a method of controlling a movable body, comprising the steps of:

> acquiring instruction information representing an instruction of a user according to user input;
> allowing the movable body to perform a process based on the instruction information with reference to an environment map of a movable area of the movable body, which is stored in a storage unit;
> detecting information on the surroundings of the movable body;
> updating the environment map based on the detected information on the surroundings of the movable body; and
> updating the environment map based on the instruction information and the process performed by the movable body based on the instruction information.

According to an embodiment of the present invention, there is provided a program for allowing a computer to serve as a control apparatus, wherein the control apparatus comprises:

> an executing unit for allowing a movable body to perform a predetermined process;
> a storage unit for storing an environment map of a movable area of the movable body;
> a detection unit for detecting information on the surroundings of the movable body;
> an update unit for updating the environment map based on the information on the surroundings of the movable body, which is detected by the detection unit; and
> an acquisition unit for acquiring instruction information representing an instruction of a user according to user input,
> wherein the executing unit allows the movable body to perform the process based on the instruction information with reference to the environment map, and
> the update unit updates the environment map based on the instruction information and the process performed by the movable body based on the instruction information.

According to the embodiments of the present invention described above, it is possible to update information on the surroundings of a robot through interaction with a user and simplify an instruction to the robot.

BRIEF DESCRIPTION OF THE DRAWINGS

> FIG. 1 is a block diagram showing a hardware configuration of a control apparatus according to an embodiment of the present invention.
> FIG. 2 is a block diagram showing a functional configuration of the control apparatus according to the same embodiment.
> FIG. 3 is a flowchart showing an environment map generation process according to the same embodiment.
> FIG. 4 is a diagram explaining the existence probability of an environment map according to the same embodiment.
> FIG. 5 is a flowchart showing a process of updating an environment map according to the same embodiment.
> FIG. 6 is a flowchart showing a process of updating an environment map according to the same embodiment.
> FIG. 7 is a diagram explaining a hierarchized structure of an environment map according to the same embodiment.

DETAILED DESCRIPTION OF THE EMBODIMENT(S)

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

Further, "the embodiment of the present invention" will be described in the following order.

1. Object of the present embodiment
2. Hardware configuration of control apparatus
3. Functional configuration of control apparatus
4. Details of operation of control apparatus

<1. Object of the present embodiment >

First, the object of the present embodiment will be described. Recently, a robot (also referred to as a movable body) capable of independently performing operations according to external states around the robot or internal states of the robot itself has been developed. For example, a robot which establishes an action path in order to detect external obstacles to avoid the obstacles or creates an obstacle map of a surrounding environment to decide the action path based on the map in a walking activity has been developed (Japanese Unexamined Patent Application Publication Nos. 2003-269937 and 2006-11880).

For example, in Japanese Unexamined Patent Application Publication No. 2003-269937, the presence or absence of an obstacle is estimated by detecting a floor surface from three-dimensional distance information captured by a robot apparatus. In detail, the surroundings of the robot apparatus are expressed by an environment map as map information of a robot-centered coordinate system which is divided in grids of a predetermined size, and the existence probability of an obstacle is held for each grid of the map. A grid for which the existence probability exceeds a predetermined threshold value is recognized as an obstacle, so that the surroundings of the robot are identified. Furthermore, in Japanese Unexamined Patent Application Publication No. 2006-11880, it is possible to express a surrounding environment with high resolution in the height direction while showing high resistance to observation noise such as a plane or an obstacle which does not actually exist.

In Japanese Unexamined Patent Application Publication Nos. 2003-269937 and 2006-11880, the robot creates the environment map by independently holding the existence probability of an object, an obstacle and the like around the robot. However, there has been increasing demand for simplification of a work instruction to the robot by allowing information instructed by a user to the robot and the existence probability of an action according to the instruction to be reflected in the environment map. In this regard, considering this point, a control apparatus 100 according to the present embodiment has been created. According to the control apparatus 100, information on the surroundings of a robot can be updated through interaction with a user and an instruction to the robot can be simplified.

<2. Hardware configuration of control apparatus>

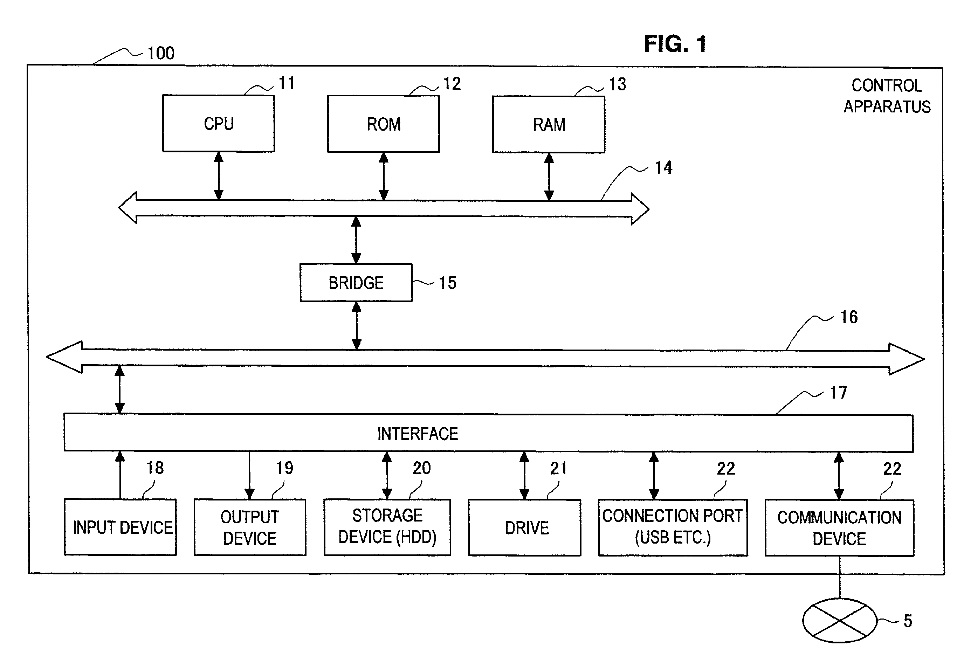

Next, the hardware configuration of the control apparatus 100 according to the present embodiment will be described with reference to FIG. 1. FIG. 1 is a block diagram showing the hardware configuration of the control apparatus 100. As shown in FIG 1, the control apparatus 100 includes a central processing unit (CPU) 11, a read only memory (ROM) 12, a random access memory (RAM) 13, a host bus 14, a bridge 15, an external bus 16, an interface 17, an input device 18, an output device 19, a storage device (hard disk drive; HDD) 20, a drive 21, a connection port 22, and a communication device 23.

The CPU 11 serves as an operation processing device and a control device and controls the entire operation of the control apparatus 100 according to various programs. Furthermore, the CPU 11 may be a microprocessor. The ROM 12 stores programs, operation parameters and the like which are used by the CPU 11. The RAM 13 primarily stores programs used for the execution of the CPU 11, parameters appropriately changing in the execution of the CPU 11, and the like. The CPU 11, the ROM 12 and the RAM 13 are connected to one another through the host bus 14 including a CPU bus and the like.

The host bus 14 is connected to the external bus 16 such as a peripheral component interconnect/interface (PCI) bus. In addition, the host bus 14, the bridge 15 and the external bus 16 are not necessarily separated from one another. For example, the functions of the host bus 14, the bridge 15 and the external bus 16 may be integrated into a single bus.

The input device 18, for example, includes an input means such as a mouse, a keyboard, a touch panel, a button, a microphone, a switch or a lever for allowing a user to input information, an input control circuit for generating an input signal based on input from the user and outputting the input signal to the CPU 11, and the like. The user of the control apparatus 100 can operate the input device 18, thereby inputting various pieces of data to the control apparatus 100 or instructing the control apparatus 100 to perform processing operations.

The output device 19, for example, includes a display device such as a cathode ray tube (CRT) display device, a liquid crystal display (LCD) device, an organic light emitting display (OLED) device and a lamp, and an audio output device such as a speaker or a headphone. T he output device 19, for example, outputs reproduced content. In detail, the display device displays various pieces of information such as reproduced video data in the form of text or images. Meanwhile, the audio output device converts reproduced audio data and the like into audio and outputs the audio.

The storage device 20 is a data storage device configured as an example of a storage unit of the control apparatus 100 according to the present embodiment, and may include a storage medium, a recording device for recording data on the storage medium, a reading device for reading data from the storage medium, an erasing device for erasing data recorded on the storage medium, and the like. The storage device 20, for example, includes an HDD. The storage device 20 drives a hard disk and stores programs executed by the CPU 11 and various pieces of data.

The drive 21 is a reader/writer for a storage medium and embedded in the control apparatus 100 or provided at an outer side of the control apparatus 100. The drive 21 reads information recorded on a removable storage medium such as a magnetic disk, an optical disc, a magneto-optical disc or a semiconductor memory which is mounted thereon, and outputs the information to the RAM 13.

The connection port 22 is an interface connected to an external device, and for example, is a port for a connection to the external device capable of transmitting data through a universal serial bus (USB) and the like.

The communication device 23, for example, is a communication interface including a communication device and the like for a connection to a communication network 5. Furthermore, the communication device 23 may be a wireless local area network (LAN)-compatible communication device, a wireless USB-compatible communication device, or a wired communication device for performing wired communication. So far, the hardware configuration of the control apparatus 100 has been described.

<3. Functional configuration of control apparatus >

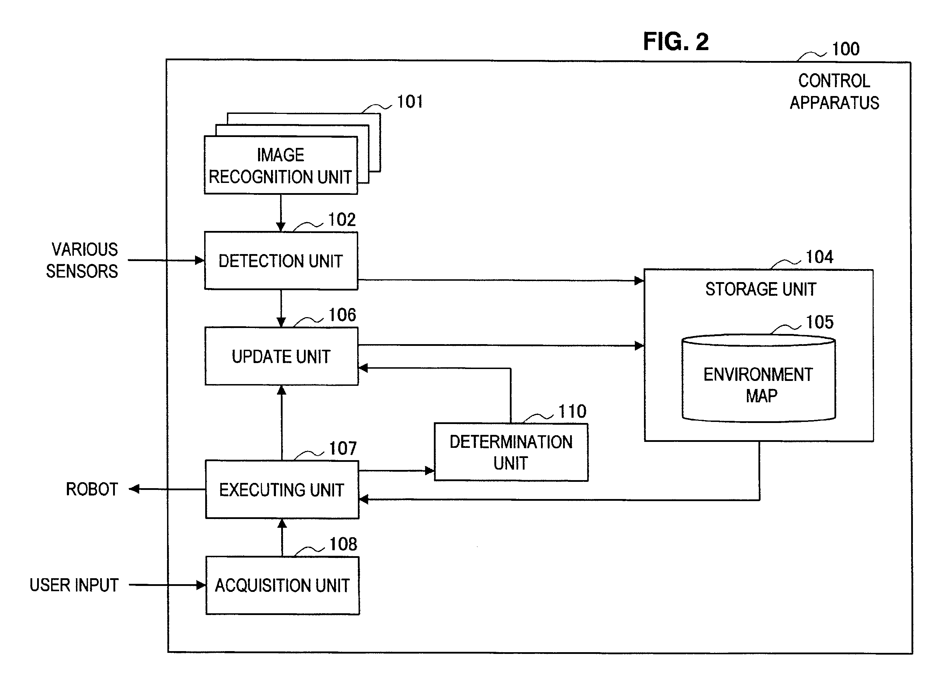

Next, the functional configuration of the control apparatus 100 will be described with reference to FIG 2. FIG. 2 is a block diagram showing the functional configuration of the control apparatus 100. As shown in FIG. 2, the control apparatus 100 includes an image recognition unit 101, a detection unit 102, a storage unit 104, an update unit 106, an executing unit 107, an acquisition unit 108, a determination unit 110 and the like.

The detection unit 102 has a function of detecting information on the surroundings of a robot. In detail, the detection unit 102 detects a surrounding floor surface based on surrounding image information or 3D information provided from various sensors such as a stereo camera or a laser range finder. Furthermore, the detection unit 102 may detect the surrounding floor surface based on the 3D information to detect an object on the floor surface. In addition, the detection unit 102 may register the texture of the floor surface to detect an object based on the presence or absence of texture different from the registered texture.

In addition, when it is detected that an object is on a surface other than the floor surface, the detection unit 102 may detect what the object is. Information regarding what the object is may be acquired by the image recognition unit 101. The image recognition unit 101 learns an image feature amount of an image of an object and the concept, name and the like of the object by relating them to each other. Consequently, the detection unit 102 may detect what the object is by comparing an image feature amount of an object acquired by a stereo camera and the like with the image feature amount of an object learned by the image recognition unit 101.

Furthermore, when it is possible to grip an object, the detection unit 102 may detect the weight of the object. The information on the surroundings of a robot detected by the detection unit 102 is stored in an environment map 105 of the storage unit 104 or provided to the update unit 106.

The environment map 105 stored in the storage unit 104 is information indicating an environment of a movable area of the robot. In detail, in the environment map 105, the surroundings of the robot may be e xpressed as map information of a robot-centered coordinate system which is divided in grids of a predetermined size. Furthermore, an existence probability of an obstacle can be held for each grid of the environment map. A grid for which the existence probability exceeds a predetermined threshold value is recognized as an obstacle, so that the surroundings of the robot are identified.

In addition, in the environment map 105, the existence probability of an obstacle may be expressed by three-dimensional grids. For example, it may be expressed by three-dimensional grids in which four square meters, horizontal resolution of 4 cm and vertical resolution of 1 cm are defined as one cell. The robot, for example, may acquire a surrounding state at a predetermined time interval such as 30 times a second. When the robot is moving, a space expressed by the three-dimensional grids changes every time. For example, for acquired cells, a visible cell may be expressed by 1 and an invisible cell may be expressed by 0.5. An occupancy probability may be gradually updated for 30 measurements per second.

Moreover, the environment map 105 may have a structure in which an entire map and local maps are hierarchized. In such a case, each local map has a three-dimensional structure when time information is taken into consideration. Furthermore, information associated with each grid (x, y, t) in the local map includes the existence probability of an object, information (name, weight) of the object, the probability of an instruction word from a user, and the like. The instruction word from the user includes 'it,' 'that' and the like which are included in instruction information representing the instruction of the user acquired by the acquisition unit 108 which will be described later.

The update unit 106 has a function of updating the environment map 105 based on information on the surroundings of a movable body detected by the detection unit 102. In detail, the update unit 106 updates the existence probability of an object associated with each grid of the environment map. Furthermore, the update unit 106 updates the environment map based on the process of the movable body performed by the executing unit 107, which will be described later. In addition, when the name and weight of an object have been detected by the detection unit 102, the update unit 106 updates the name and weight of the object which are associated with the grid.

The acquisition unit 108 has a function of acquiring the instruction information representing the instruction of the user according to user input. The instruction information, for example, includes information regarding an object, which the user wants to possess, and the like, such as a place of the object or the name of the object. Furthermore, the instruction information may include a sentence representing the instruction of the user such as "bring juice to the living room" or "bring that to me.' The acquisition unit 108 provides the executing unit 107 with the instruction information from the user. The acquisition unit 108 may acquire a context, such as a positional relationship between the user and the robot and a place of the robot, from the instruction information of the user, and provide it to the executing unit 107.

The executing unit 107 has a function of allowing the robot to perform processes based on the instruction information with reference to the environment map 105. The executing unit 107 analyzes the instruction information provided by the acquisition unit 108 and allows the robot to perform a process of moving an object, which is included in the instruction information and indicated by the user, to a user's position. Furthermore, the executing unit 107 moves the robot to a place of the object indicated by the user, allows the robot to grip the object and moves the robot to the user's position.

For example, when the instruction of "bring that to me" is given by the user, the executing unit 107 estimates an object corresponding to 'that' with reference to the environment map 105. As described above, the appearance probability of the instruction word included in the instruction information is stored in the environment map 105 every time. Consequently, the executing unit 107 can analyze the time and place at which the instruction of "bring that to me" has been given by the user, thereby estimating what 'that' is from the probability of 'that' held every time.

In addition, the update unit 106 may update the environment map by relating the instruction word, which is included in the instruction from the user and executed by the executing unit 107, to the existence probability of the object. Moreover, the update unit 106 may update the appearance probability of the instruction word at a predetermined time interval. That is, the update unit 106 increases the probability to be indicated by 'that' of the environment map or the grid in the time and place at which the robot has acted.

The determination unit 110 has a function of determining whether the process performed by the robot under the execution of the executing unit 107 according to the user input corresponds to the instruction of the user. When the determination unit 110 determines that the process performed by the robot under the execution of the executing unit 107 coincides with the instruction of the user, the update unit 106 increases the existence probability of the information regarding the object which is included in the instruction information.

In addition, when the determination unit 110 determines that the process performed by the robot under the execution of the executing unit 107 coincides with the instruction of the user, the update unit 106 increases the existence probability of the indicated object in the indicated place which is included in the instruction information. Moreover, the update unit 106 increases the existence probability of the instruction word such as 'that' at the indicated time. In the embodiment, the floor surface has been described as an area where the robot can grip the object. However, the present invention is not limited thereto. For example, a plane such as a table or a shelf may be set as an area where the robot can grip an object. So far, the functional configuration of the control apparatus 100 has been described.

<4. Details of operation of control apparatus >

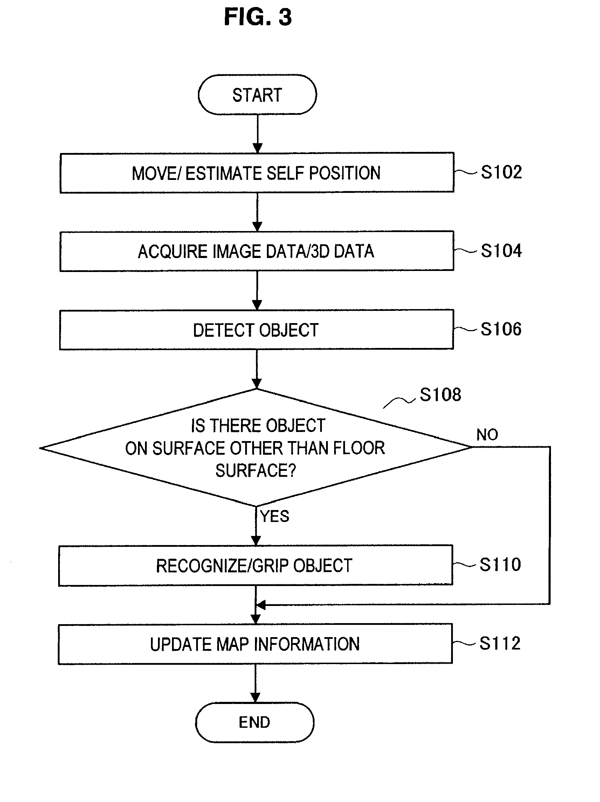

Next, the operation of the control apparatus 100 will be described in detail with reference to FIGS. 3 to 7. FIG. 3 is a flowchart showing an environment map generation process in the control apparatus 100. In FIG. 3, a case where a movable body independently moves to generate or update an environment map will be described as an example.

As shown in FIG. 3, first, together with the movement of a robot, the control apparatus 100 performs self-position estimation (S102). According to the self-position estimation, the control apparatus 100 estimates the position of the robot on the environment map. In step S102, when the environment map has already been generated, the control apparatus 100 determines a grid on the environment map where the robot is. However, when the environment map has not been generated, the control apparatus 100 determines a self-position on a predetermined coordinate system.

Next, the control apparatus 100 acquires image data and 3D data around the robot (S104). In step S104, the control apparatus 100 acquires image information and 3D information around the robot using information from a sensor such as a stereo camera or a laser range finder.

Then, the control apparatus 100 performs floor surface detection based on the 3D information to detect an object on a floor surface (S106). Furthermore, in step S106, the control apparatus 100 may register texture of the floor surface in advance, and detect an object by the presence or absence of texture different from the registered texture.

The control apparatus 100 determines whether there is an object on a surface other than the floor surface (S108). In step S108, when it is determined that there is an object on the surface other than the floor surface, the control apparatus 100 recognizes what the object is using the image recognition unit 101. However, in step S110, when it has failed to recognize an object or there is no recognition machine corresponding to the object, object information is set as Unknown.

Furthermore, the control apparatus 100 verifies whether the object can be gripped by allowing the robot to push or grip the object. When the object can be gripped, the control apparatus 100 acquires information regarding the weight of the object. In step S108, when it is determined that there is no object on the surface other than the floor surface, the process of step S 112 is performed.

Then, the control apparatus 100 updates environment map (Map) information according to the detection result of the object in step S106 and the recognition result of the object in step S110 (step S112). In step S108, when it is determined that there is no object on the surface other than the floor surface, the control apparatus 100 reduces the probability that an object will be at a corresponding position on the environment map.

In addition, in step S108, when it is determined that there is an object on the surface other than the floor surface, the control apparatus 100 increases the probability that the object will be at the corresponding position on the environment map. However, when there is already information on the environment map, it is necessary to check currently estimated information based on data measured in the past. Thus, when the previous information does not coincide with information of a detected object, it is probable that a plurality of different objects are at the same place on the environment map.

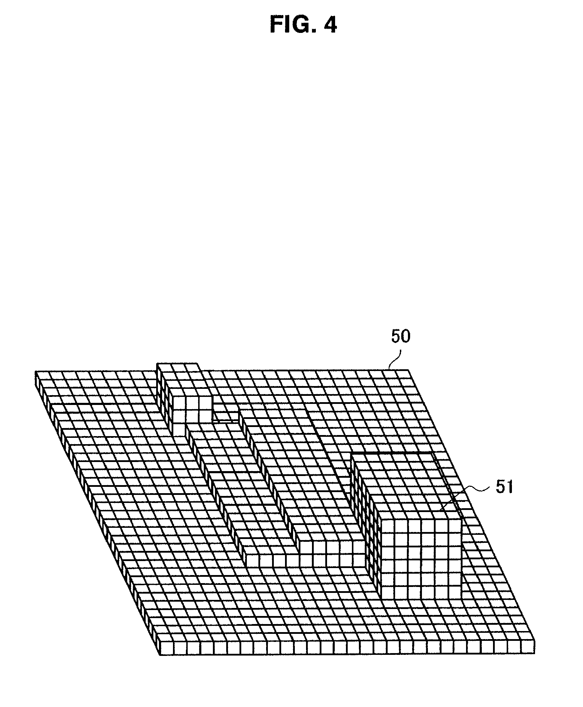

FIG. 4 is a diagram explaining the existence probability of the environment map. FIG. 4 is a diagram showing three-dimensional grids in which the existence probability of an obstacle has been reflected. An area expressed by the three-dimensional grids, for example, is expressed by three-dimensional grids in which four square meters, horizontal resolution of 4 cm and vertical resolution of 1 cm are defined as one cell. Furthermore, for example, since a surrounding state is acquired at a predetermined time interval such as 30 times per second, when the robot is moving, a space expressed by three-dimensional grids changes every time. For acquired cells, a visible cell is expressed by 1 and an invisible cell is expressed by 0.5. An existence probability is gradually updated for 30 measurements per second.

The creation and update of the three-dimensional grids shown in FIG. 4 are performed based on an algorithm in which an obstacle is not on a straight line connecting a measurement point to an observation center. For example, an empty process is performed with respect to a cell between a cell p which is a point to be measured and a photographing device such as a stereo camera of a robot apparatus. In succession, an occupied process is performed with respect to a cell serving as a measurement point p.

The three-dimensional grid holds the existence probability (the occupancy probability of an obstacle) p (C) of an obstacle for a cell C, and the empty process and the occupied process are statistical processes for each cell. The empty process is for reducing the existence probability of an obstacle and the occupied process is for increasing the existence probability of an obstacle. In the present embodiment, the Bayes' updating rule is used as an example of a method of calculating the existence probabilities of the empty process and the occupied process.

In the empty process, the occupancy probability is reduced as expressed by Equation 1 below. In the occupied process, the occupancy probability is increased as expressed by Equation 2 below. Equation 1 represents the probability of the cell C under the conditions in which p (C) indicating the occupancy probability of the cell C denotes "occupancy." Furthermore, in Equation 1 or Equation 2, the probabilities p (occ| ... ) and p (empty| ... ) representing whether the cell C is occupied are predetermined threshold values th.

Equation 1

$$p(c) \leftarrow p(c \mid empty) = \frac{p(empty \mid c)p(c)}{p(empty \mid c)p(c) + p(empty \mid \neg c)p(\neg c)} \qquad \cdots (\text{Equation 1})$$

Equation 2

$$p(c) \leftarrow p(c \mid occ) = \frac{p(occ \mid c)p(c)}{p(occ \mid c)p(c) + p(occ \mid \neg c)p(\neg c)} \qquad \cdots (\text{ Equation 2 })$$

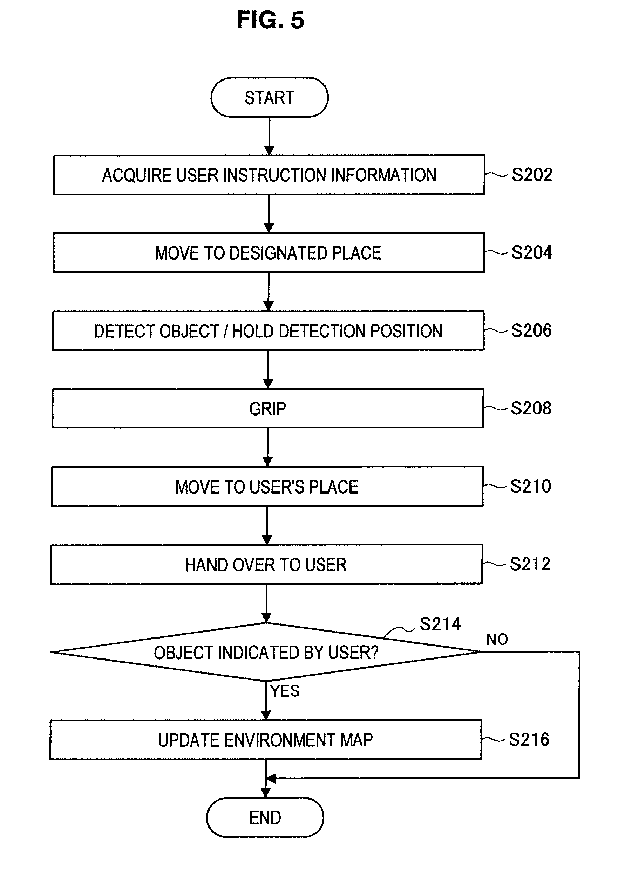

So far, the environment map generation process in the control apparatus 100 has been described. Next, an updating process of the environment map based on action according to the instruction of a user will be described with reference to FIG. 5. FIG. 5 is a flowchart showing the updating process of the environment map based on action according to the instruction of the user. As shown in FIG. 5, first, instruction information of the user is acquired (S202). In step S202, information such as the place of a target object and the name of the target object is acquired from the user as the instruction information of the user.

Next, the robot is moved to a designated place in step S202 (S204). In step S204, since various pieces of observation data can be acquired during the movement of the robot, an environment map updating process based on autonomous movement shown in FIG. 3 may be performed. Furthermore, when moving the robot, it is possible to decide an optimal action path based on the information of a previously generated or updated environment map.

After moving the robot to the designated place in step S204, an object is detected at the designated place, and a detection position is held as information on the environment map (S206). Furthermore, the object detected in step S206 is gripped by the robot (S208).

Then, the robot is moved to a place of the user (S210). Even in step S210, observation data may be acquired during the movement of the robot and the environment map may be updated.

The object gripped in step S208 is handed over to the user (S212). Herein, it is confirmed whether the object handed over to the user in step S212 is an object indicated by the user (S214). In step S214, the confirmation is performed, so that incorrect object information can be prevented from being reflected in the environment map due to the misrecognition or wrong movement of the robot for an object.

When it is confirmed that the object handed over to the user is the object indicated by the user in step S214, the environment map is updated (S216). In step S216, the existence probability on the environment map such as object information including the detection place of the object, the name and weight of the object and the like is increased. Unlike the process of independently updating the environment map as shown in FIG. 3, when updating the environment map according to the user's instruction, since the name and the like of the object are confirmed by the user, the existence probability of the environment map may be significantly updated.

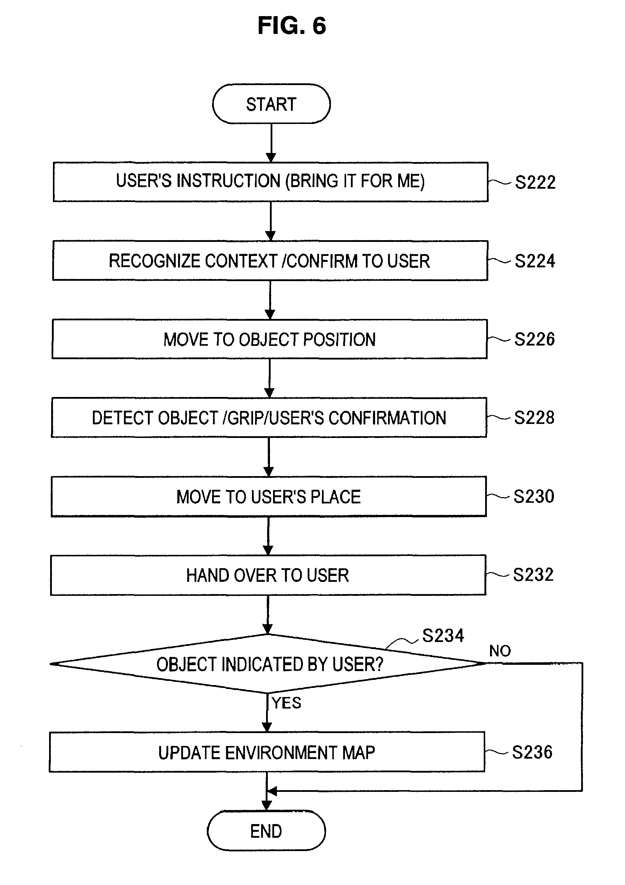

Next, the process when the instruction of "bring that to me" is given by a user will be described with reference to FIG. 6. FIG. 6 is a flowchart showing the process when the instruction of "bring that to me" is given by the user. As shown in FIG. 6, first, the instruction of "bring that to me" is acquired as instruction information of the user (S222).

After the instruction of "bring that to me" is given by the user in step S222, context such as a positional relationship between the user and the robot, the current place of the robot or the current time is recognized (S224). For example, it is recognized whether the current place of the robot is a living room or a kitchen, and morning, daytime or night is recognized from the current time. By using the context, an object corresponding to "that" is estimated from environment map information.

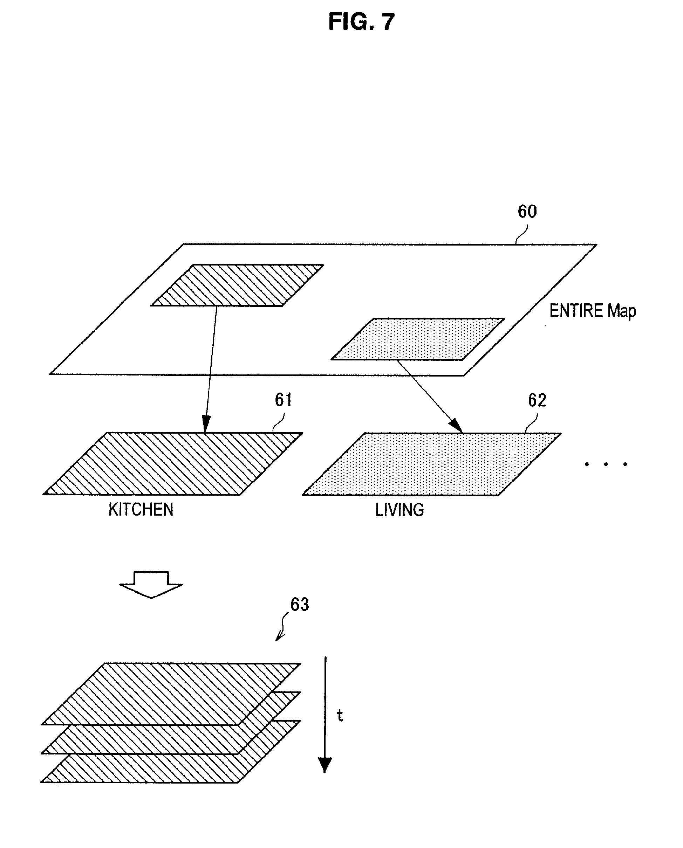

Herein, a hierarchized structure of the environment map will be described. As shown in FIG. 7, the environment map has a hierarchized structure including an entire map and local maps. Furthermore, the local map has a three-dimensional structure when time axis information is taken into consideration. Information associated with each pixel (x, y, t) of the environment map includes the existence probability of an object, information (name, weight) of the object, the probability of an instruction word from a user, and the like.

The environment map is updated by increasing or reducing all probabilities as described above. Probability density is updated temporally and spatially. However, the probability of an instruction word such as "that" is updated only in the space of that time. For example, the probability of an object indicated as "that" in a kitchen 61 is updated every time as shown in an illustrative diagram 63. This is because the probability of an object indicated as "that" changes according to the passage of time. The probability of "that" is updated every time, so that it is possible to allow the robot to correctly interpret "that" of the instruction of "bring that to me" from the user.

Returning to FIG. 6, in step S224, after estimating an object corresponding to "that", whether "that" indicated by the user is the estimated object may be confirmed by the user. Consequently, the object indicated by the user can be moved to the user more reliably.

The object indicated as "that" by the user is estimated in step S224, and the robot is moved to the position of the object indicated by the user based on the environment map information (S226). In step S226, various pieces of observation data may be acquired during the movement of the robot, and the environment map may be updated as needed.

Then, the object is detected and gripped by the robot (S228). In step S228, when necessary, confirmation by the user may be performed using the names of objects registered on the environment map. For example, whether the name of an object indicated as "that" is a name such as "PET bottle" or "juice" may be displayed by text, or the image of an object may be displayed to the user.

Next, the robot moves to the place of the user (S230). Even in step S230, observation data may be acquired during the movement of the robot, and the environment map may be updated.

Then, the object gripped in step S228 is handed over to the user (S232). Here, it is confirmed whether the object handed over to the user in step S232 is the object indicated by the user (S234). In step S234, when it is confirmed that the object handed over the user corresponds to "that" indicated by the user, the environment map is updated (S236). In step S236, object information at a corresponding point of the environment map is updated. That is, the probability to be indicated as "that" in a certain context is increased.

So far, the process when the instruction of "bring that to me" is given by a user has been described. As described above, according to the present embodiment, the robot is allowed to perform processes based on the instruction information from the user with reference to the environment map, and the environment map is updated based on the instruction information from the user or the processes of a movable body based on the instruction information. Consequently, various pieces of information can be added to the environment map through interaction with the user.

While the preferred embodiments of the present invention have been described above with reference to the accompanying drawings, the present invention is not limited to the above examples. A person skilled in the art may find various alternations and modifications within the scope of the appended claims, and it should be understood that they will naturally come under the technical scope of the present invention.

For example, each step in the process of the control apparatus 100 in the present specification is not necessarily performed in chronological series in the order described in the flowchart. That is, although each step in the process of the control apparatus 100 is a different process, the steps in the process may be performed in a parallel manner.

Furthermore, the hardware such as the CPU, the ROM and the RAM embedded in the control apparatus 100 and the like can be created by a computer program for showing the functions equivalent to each element of the above-described control apparatus 100. In addition, a storage medium for storing the computer program is also provided.

The present application contains subject matter related to that disclosed in Japanese Priority Patent Application JP 2010-059621 filed in the Japan Patent Office on March 16, 2010, the entire content of which is hereby incorporated by reference.

**Claims**

1. A control apparatus comprising:

   an executing unit for allowing a movable body to perform a predetermined process;
   a storage unit for storing an environment map of a movable area of the movable body;
   a detection unit for detecting information on the surroundings of the movable body;
   an update unit for updating the environment map based on the information on the surroundings of the movable body, which is detected by the detection unit; and
   an acquisition unit for acquiring instruction information representing an instruction of a user according to user input,
   wherein the executing unit allows the movable body to perform the process based on the instruction information with reference to the environment map, and
   the update unit updates the environment map based on the instruction information and the process performed by the movable body based on the instruction information.

2. The control apparatus according to claim 1, wherein the environment map includes information representing an existence probability of an object, the detection unit detects the object around the movable body, and the update unit updates the existence probability of the object which is included in the environment map.

3. The control apparatus according to claim 2, wherein the update unit updates the environment map by relating information regarding the object, which is included in the instruction information, to the existence probability of the object.

4. The control apparatus according to claim 2, wherein the update unit updates the environment map by relating an instruction word, which is included in the instruction information, to the existence probability of the object.

5. The control apparatus according to claim 4, wherein the update unit updates an appearance probability of the instruction word at a predetermined time interval.

6. The control apparatus according to one of the claims 1 to 5, wherein the executing unit analyzes the instruction information and allows the movable body to perform a process of moving an object indicated by a user, which is included in the instruction information, to a user's position.

7. The control apparatus according to one of the claims 1 to 6, wherein the executing unit allows the movable body to move to a place of an object indicated by a user, and to move to a user's position while gripping the object.

8. The control apparatus according to one of the claims 1 to 7, further comprising a determination unit for determining whether the process of the movable body performed by the executing unit corresponds to the instruction of the user.

9. The control apparatus according to claim 8, wherein, when the determination unit determines that the process of the movable body performed by the executing unit coincides with the instruction of the user, the update unit increases an existence probability of information regarding an object which is included in the instruction information.

10. The control apparatus according to claim 9, wherein the update unit increases an existence probability of an indicated object in an indicated place which is included in the instruction information.

11. The control apparatus according to claim 9, wherein the update unit increases an existence probability of an instruction word at an indicated time which is included in the instruction information.

12. A method of controlling a movable body, comprising the steps of:

acquiring instruction information representing an instruction of a user according to user input;
allowing the movable body to perform a process based on the instruction information with reference to an environment map of a movable area of the movable body, which is stored in a storage unit;
detecting information on the surroundings of the movable body;
updating the environment map based on the detected information on the surroundings of the movable body; and
updating the environment map based on the instruction information and the process performed by the movable body based on the instruction information.

13. A program for allowing a computer to serve as a control apparatus, wherein the control apparatus comprises:

an executing unit for allowing a movable body to perform a predetermined process;
a storage unit for storing an environment map of a movable area of the movable body;
a detection unit for detecting information on the surroundings of the movable body;
an update unit for updating the environment map based on the information on the surroundings of the movable body, which is detected by the detection unit; and
an acquisition unit for acquiring instruction information repres enting a n instruction of a user according to user input,
wherein the executing unit allows the movable body to perform the process based on the instruction information with reference to the environment map, and
the update unit updates the environment map based on the instruction information and the process performed by the movable body based on the instruction information.

**FIG. 1**

CONTROL APPARATUS — 100

- CPU — 11
- ROM — 12
- RAM — 13
- 14
- BRIDGE — 15
- 16
- 17
- INTERFACE
- INPUT DEVICE — 18
- OUTPUT DEVICE — 19
- STORAGE DEVICE (HDD) — 20
- DRIVE — 21
- CONNECTION PORT (USB ETC.) — 22
- COMMUNICATION DEVICE — 22
- 5

**FIG. 2**

CONTROL APPARATUS ~100

IMAGE RECOGNITION UNIT ~101

VARIOUS SENSORS → DETECTION UNIT ~102

UPDATE UNIT ~106

STORAGE UNIT ~104

ENVIRONMENT MAP ~105

DETERMINATION UNIT ~110

EXECUTING UNIT ~107

ROBOT ←

USER INPUT → ACQUISITION UNIT ~108

EP 2 366 503 A2

# FIG. 3

START

MOVE/ ESTIMATE SELF POSITION — S102

ACQUIRE IMAGE DATA/3D DATA — S104

DETECT OBJECT — S106

S108

IS THERE OBJECT ON SURFACE OTHER THAN FLOOR SURFACE?

NO

YES

RECOGNIZE/GRIP OBJECT — S110

UPDATE MAP INFORMATION — S112

END

# FIG. 4

# FIG. 5

```
                    ┌─────────────┐
                    │    START    │
                    └──────┬──────┘
                           │
                           ▼
        ┌──────────────────────────────────────────┐
        │   ACQUIRE USER INSTRUCTION INFORMATION    │──── S202
        └──────────────────────┬───────────────────┘
                               │
                               ▼
        ┌──────────────────────────────────────────┐
        │          MOVE TO DESIGNATED PLACE         │──── S204
        └──────────────────────┬───────────────────┘
                               │
                               ▼
        ┌──────────────────────────────────────────┐
        │   DETECT OBJECT / HOLD DETECTION POSITION │──── S206
        └──────────────────────┬───────────────────┘
                               │
                               ▼
        ┌──────────────────────────────────────────┐
        │                   GRIP                    │──── S208
        └──────────────────────┬───────────────────┘
                               │
                               ▼
        ┌──────────────────────────────────────────┐
        │             MOVE TO USER'S PLACE          │──── S210
        └──────────────────────┬───────────────────┘
                               │
                               ▼
        ┌──────────────────────────────────────────┐
        │              HAND OVER TO USER            │──── S212
        └──────────────────────┬───────────────────┘
                               │
                               ▼
                            ◇ S214                       NO
           ◇────── OBJECT INDICATED BY USER? ──────◇──────┐
                               │                          │
                               │ YES                      │
                               ▼                          │
        ┌──────────────────────────────────────────┐      │
        │           UPDATE ENVIRONMENT MAP          │── S216│
        └──────────────────────┬───────────────────┘      │
                               │◄─────────────────────────┘
                               ▼
                    ┌─────────────┐
                    │     END     │
                    └─────────────┘
```

# FIG. 6

START

USER'S INSTRUCTION (BRING IT FOR ME) — S222

RECOGNIZE CONTEXT /CONFIRM TO USER — S224

MOVE TO OBJECT POSITION — S226

DETECT OBJECT /GRIP/USER'S CONFIRMATION — S228

MOVE TO USER'S PLACE — S230

HAND OVER TO USER — S232

S234

OBJECT INDICATED BY USER? — NO

YES

UPDATE ENVIRONMENT MAP — S236

END

# FIG. 7

60

ENTIRE Map

61

KITCHEN

62

LIVING

. . .

63

t

**REFERENCES CITED IN THE DESCRIPTION**

**Patent documents cited in the description**

- JP 2003269937 A

- JP 2006011880 A
- JP 2010059621 A